# EUROPÄISCHE PATENTSCHRIFT

(11) **EP 0 779 829 B1**
(45) Veröffentlichungstag und Bekanntmachung des Hinweises auf die Patenterteilung: **23.12.1998**
(21) Anmeldenummer: 95932662.0
(22) Anmeldetag: 04.09.1995
(51) Int. Cl.: B01D 3/00, B01D 1/30, B01D 1/00, B01D 1/12, C02F 1/04

(54) **VERFAHREN UND VORRICHTUNG ZUM ENTSALZEN VON MEERWASSER**
PROCESS AND DEVICE FOR DESALINATING SEA WATER
PROCEDE ET DISPOSITIF DE DESSALEMENT D'EAU DE MER

(30) Priorität: 05.09.1994 DE 4431546
(43) Veröffentlichungstag der Anmeldung: 25.06.1997
(73) Patentinhaber: HOISS, Jakob, D-80637 München (DE)
(72) Erfinder: HOISS, Jakob, D-80637 München (DE)
(74) Vertreter: Fuhlendorf, Jörn, Dipl.-Ing.
(86) Internationale Anmeldenummer: EP9503476
(87) Internationale Veröffentlichungsnummer: WO9607460

(56) Entgegenhaltungen:
- EP-A- 0 142 251
- WO-A-95/06504
- FR-A- 2 337 693
- GB-A- 164 525
- US-A- 4 264 801

## Beschreibung

Die vorliegende Erfindung bezieht sich auf ein Verfahren und eine Vorrichtung zum Entsalzen von Meerwasser durch Destillation.

Frisch- und Trinkwasser ist ein wertvoller Rohstoff, der nicht nur in besonders trockenen Klimazonen dringend gebraucht wird. Mehr und mehr steigt die Nachfrage auch in industrialisierten Ländern. Die knapper werdenden vorhandenen Resourcen führen zu erheblichen Anstrengungen, neue Trinkwasserquellen zu finden und nicht trinkbares Wasser durch Reinigung aufzubereiten, wie bspw. Meerwasser. Insbesondere in sehr trockenen Gegenden ist es ein Bedürfnis aus Meerwasser zur Bewässerung von Pflanzen geeignetes Wasser aufzubereiten.

Übliche Verfahren zur Meerwasserentsalzung sind die Umkehrosmose (RO), die Vapour Recompression Evaporation (VR), und die Mehrstufenverdampfung (MSF, ME). Bei der Umkehrosmose wird das Meerwasser wie durch eine halbdurchlässige Membran gepreßt und dabei gereinigt. Nachteilig hieran ist jedoch, daß derartige RO-Anlagen sehr empfindlich gegenüber verschmutztem, insbesondere ölverschmutztem Wasser sind, so daß das zugeführte Meerwasser ständiger Kontrolle bedarf. Beim VR-Verfahren, das nicht im Überdruck arbeitet, wird das Meerwasser unter vermindertem Druck verdampft und danach durch Verdichtung wieder kondensiert. Die Verdampfung bei Unterdruck bedeutet, daß nur durch zusätzlichen hohen, insbesondere chemischen Aufwand Trinkwasser vom guter Qualität aus dem aus Meerwasser, das ggf. in Küstennähe stark bakteriologisch und auch weiter organisch belastet ist, erhalten werden kann, und zwar aus folgenden Gründen: Erstens sind bei einer derart niedrigen Verdampfungstemperatur praktisch nur die nichtflüchtigen Bestandteile im Wasser von diesem zu trennen, wie bspw. das Salz aus Meerwasser, das man allein durch die Phasenänderung entziehen kann. Eine Trennung der flüchtigen Bestandteile vom Wasser ist jedoch mit diesem Verfahren allein größtenteils nicht möglich. Betrachtet man zweitens die mikrobiologische Seite der Destillation, so wird der Nachteil des Vakuumverdampfungsverfahrens noch deutlicher. Aufgrund von veröffentlichten Untersuchungen weiß man, daß Bakterien, Keime und dgl. erst bei einer bestimmten Temperatur und davon abhängig nach einer gewissen Zeit abgetötet werden. Dies ist für die Aufbereitung von Meerwasser zu Trinkwasser je nach Belastung unbedingt erforderlich, da das Verfahren nicht sicherstellt, daß auch nicht verdampftes Wasser oder Partikel aus ihm in das Destillat übertreten. Drittens benötigen derartige Vakuumverdampfungsverfahren in der Destillatleitung eine Pumpe, die das erzeugte Destillat aus der unter Vakuum stehenden Vorrichtung absaugt, da die Druckdifferenz zwischen dem unter Vakuum stehenden Innenraum und dem Normaldruck nur auf diese Weise überwunden werden kann. Dies bedeutet aber nichts anderes als eine erneute Verschmutzung des Destillats durch die sich bewegenden Teile der Pumpe und erhöhten apparativen und wartungstechnischen Aufwand. Bei der Mehrstufenverdampfung, die als Energiequelle thermische Energie in Form von Heizdampf benötigt, wird in nachteiliger Weise laufend aufbereitetes Wasser, das zur Erzeugung des für den Verdampfungsprozeß nötigen Heizdampf dient, gebracht. In sehr trockenen Gegenden, wie Wüsten, steht dies nicht zur Verfügung bzw. vermindert die Destillatleistung der Anlage, da es ihr entnommen werden muß.

Im Zusammenhang mit der Meerwasserentsalzung muß darauf geachtet werden, daß die Löslichkeitsgrenze von CaSO₄ (Kalziumsulfat) nicht überschritten wird. Mit zunehmender Konzentration und zunehmender Temperatur wird jedoch die Sättigung schneller erreicht, so daß bei etwa 110°C und der Standard-Meerwasser-Anhydrit-Kalziumsulfat-Konzentration die Löslichkeitsgrenze erreicht ist. Bei Meerwasser mit höherer Salzkonzentration wird diese Grenze zu geringeren Temperaturen verschoben (H.E. Hönig "Seawater and Seawater Distillation", S. 68 + 69, Fichtner-Handbook, Vulkan-Verlag, Essen). Je mehr der Prozeß der Meerwasserentsalzung bei der Verdampfung in einen Bereich höheren Salzgehaltes gelangt, desto mehr Ausfällungen der drei Kalziumsulfat-Modifikationen ergeben sich. Es ist darauf zu achten daß bei jedem der genannten Prozesse die Ausfällungen nicht in der Weise auftreten, daß Membranen verblockt oder Verdampfer zugesetzt werden. Bei hohen Abschlämmraten lassen sich entsprechende Aufkonzentrationen vermeiden. Üblicherweise werden dem Meerwasser, um Ablagerungen zu vermeiden, Additive beigefügt, die die Kistrallisation der z.B. beim Kalziumsulfat auftretenden Modifikationen (Anhydrid, wasserhaltiges Kalziumsulfat und Gips) verhindern, bzw. bei Härtebildnern "Threshold"-Effekte bewirken. Der Nachteil bei der Fahweise mit hohen Abschlämmraten liegt in einem zusätzlichen Energieverbrauch, sowohl bei RO-Anlagen durch höhere Pumpenleistungen, als auch bei MSF und VR-Anlagen durch die Aufheizung des um die Abschlämmwassermenge größeren Meerwasserbedarfs, der auf die jeweilige Siedetemperatur aufgeheizt werden muß.

Aus der EP-A-0 142 251 ist ein Thermokompressionsverfahren zum Destillieren von Rohwasser in einem Einkreissystem beschrieben. Dieses bekannte Verfahren arbeitet entweder im Vakuum oder nur mit leichtem Überdruck (ca.0,1 bar über der Umgebung). Der Grund liegt darin, dass das dort als Verdichter beschriebene Gebläse bzw. Ventilator den notwendigen Überdruck nicht aufbringt. Darüberhinaus ist deren Lebensdauer viel zu kurz, da Meerwasserdampf mit allen Restbestandteilen bei höherem Druck und somit höherer Temperatur von bspw. 110° Celsius aggressiver ist und die Verdichter korosiv und erosiv schnell zerstört.

Zwar sind aus der FR-A-2 337 693 bzw. der DE-C-26 00 398 ein Verfahren und eine Vorrichtung zur Rohwasser-Destillation bekannt geworden, bei dem bzw. bei der bereits entsalztes und entmineralisiertes Rohwasser behandelt und zu hochreinem, keimfreien Destillat verarbeitet wird, wobei etwa diesselbe Menge an Destillat erzeugt wird, wie Rohwasser der Vorrichtung zugeführt wird. Bei diesem Verfahren wird ein Zweikreissystem derart verwendet, dass das Rohwasser innerhalb eines Primärsystems und ein Sekundärmedium innerhalb eines einen Verdichter enthaltenden, vom Primärsystem getrennten, in sich geschlossenen Sekundärsystems verdampft und kondensiert wird, wobei das Rohwasser durch Erhitzen an dem zuvor im Verdichter weiter erwärmten Sekundärmedium bei Überdruck und dieses im Sekundärsystem durch Kondensation des Meerwasserdampfes verdampft und der Mehrwasserdampf durch ein Zyklon geführt wird. Dieses bekannte Verfahren eignet sich jedoch lediglich zur Destillation von bereits entsalztem und entmineralisiertem Rohwasser, nicht aber als kontinuierliches Verfahren zur Entsalzung von Meerwasser. Würde man dieser bekannten Vorrichtung Meerwasser in entsprechender Menge zuführen, so würde sich das Primärsystem in kürzester Zeit mit z.B. sämtlichen der Kalziumsulfat-Modifikationen und auch anderen aus dem Meerwasser stammenden Salzen zusetzen.

Aufgabe der vorliegenden Erfindung ist es deshalb, ein Verfahren und eine Vorrichtung der eingangs genannten Art derart auszubilden, daß es bzw. sie zur thermischen Meerwasserentsalzung geeignet ist, um keimfreies Wasserdestillat hoher Qualität bei gleichzeitig niedriger Aufkonzentration des zu verdampfenden Meerwassers und dennoch energiesparend zu erzeugen.

Zur Lösung dieser Aufgabe sind bei einem Verfahren bzw. einer Vorrichtung der eingangs genannten Art die im Anspruch 1 bzw. die im Anspruch 8 angegebenen Merkmale vorgesehen.

Mit den erfindungsgemäßen Maßnahmen ist erreicht, daß sich aufgrund der Wahl des geringen Wertes des Konzentrationsfaktors CF eine niedrige Aufkonzentration des Meerwassers im Primärsystem erreichen läßt, was bedeutet, daß das erfindungsgemäße Verfahren in einem Bereich abläuft, der nur wenig oberhalb der Sättigungslinie derjenigen Kalziumsulfat-Modifikation (und auch anderen im Meerwasser üblichen Salzen) liegt, die z.B. als Anhydrit (hier kristallwasserfreies Kalziumsulfat) bzw. in der Ablagerung als Kesselstein bezeichnet wird. Dies bedeutet daß es ausreicht, relativ geringe Mengen an Additiven, was zur Schonung der Umwelt beiträgt, zuzusetzen, um eine Kristallbildung des Anhydrits im Primärsystem verbunden mit der hier unpraktischen Eigenschaft, sich im Apparat anzulagern im wesentlichen zu verhindern. Diese niedrige Aufkonzentration in Verbindung mit der hohen Abschlämmrate verhindert auch eine wesentliche Erhöhung der Siedetemperatur im Primärsystem während des Betriebes, was sich wiederum vorteilhaft auf die Bauart des Verdichters im Sekundärsystem auswirkt. Ein derartiger CF-Wert ist insbesondere für Anlagen kleiner und mittlerer Leistung geeignet. Da das verwendete Zweikreissystem im Überdruck arbeitet, sind keine Pumpen zum Absaugen des Detillats notwendig, so daß das Destillat in der Reinheit verbleibt, in der es das Primärsystem verläßt. Dieses Kondensationsverfahren ergibt ferner eine ausgezeichnete Frischwasserqualität mit beispielsweise einem NaCl-Gehalt von unter 5 ppm. Die Art der Destillatherstellung unter Verwendung der Zyklonabscheidung ergibt ein praktisch keimfreies Wasserdestillat. Durch diese Keim- und Salzfreiheit des Destillats kann dieses für die verschiedensten Zwecke nach entsprechender Konditionierung verwendet werden.

Als geeigneter CF-Wert hat sich ein Wert zwischen etwa ⁻⁶K⁻¹1,3 und 1,4 vorz. von etwa 1,33 herausgestellt. Dadurch wird erreicht, daß im Verdampfer für das Meerwasser ein Durchsatz gefahren wird, der ca. 3-fach höher als die Destillatmenge ist, Somit ist die Strömungsgeschwindigkeit im Verdampfer ebenfalls 3-fach höher, als dies bei einer Destillationsanlage ohne Abschlämmung (diskontinuierliche Fahrweise vorausgesetzt) der Fall ist.

Eine Erhöhung der Strömungsgeschwindigkeit im Verdampfer bewirkt eine Verbesserung der Wärmeübergangszahl im Verdampfer, eine geringe Neigung zur Bildung von Ablagerungen an den Verdampferwandungen, eine geringe Neigung zur Korrosion, da Beläge, die z.B. bei Spannungsrißkorrosion in Spalten eine wesentliche Rolle spielen, bei deren Bildung gehindert werden, ferner kleinere Dosiermengen, falls Additive zum Anti-Scaling benötigt werden, und einen höheren Umlauffaktor im Verdampfer ohne Zusätzliche Umwälzpumpe. Der höhere Umlauffaktor bewirkt eine längere Verweilzeit des Meerwassers bei Verdampfungstemperatur, so daß der Fₒ-Wert (Maß für die Sterilisationsgüte des Prozesses) erhöht wird. Somit ist die Abtötung der im Meerwasser befindlichen Mikroorganismen sehr viel sicherer als dies bei nur kurzer Verweilzeit der Fall ist, gewährleistet.

Bei einem CF von 2 wäre dagegen die Strömungsgeschwindigkeit nur noch doppelt so hoch. Würde der CF-Wert kleiner als 1,3 gewählt (z.B. 1,2), so bedeutete dies zwar eine weitere Erhöhung der Strömungsgeschwindigkeit, was dann allerdings zu einem Ansteigen des Druckverlustes im Wärmeübertrager führen würde.

Jedoch darf der zulässige Druckverlust nicht sehr groß sein, damit der automatische Austrag (also durch den vorhandenen inneren Überdruck im Verdampfer von ca. 0,3 bar bei 110°C des Abschlämmwassers gewährleistet ist. Bei Ausfall der Anlage kann sie sich selbst entleeren. Dies ist hinsichtlich diverser Verstopfungsprobleme, die beim Abkühlen auftreten können, sehr wichtig. Wärmeübertrager mit sehr geringem Druckverlust bei hohem Durchsatz werden sehr groß und somit zu teuer. Ebenfalls ist das Risiko, daß durch eine dann sehr geringe Strömungsgeschwindigkeit im Inneren sich Beläge bilden bzw. sie sich zusetzen groß. Ein weiterer Nachteil bei zu hohen Durchsätzen ist das energetische Problem. Da alles im Verdampfer befindliche Meerwasser auf Siedetemperatur aufgeheizt werden muß (im Beispiel 110 °C), wird auch eine Erhöhung der Zusatzenergie nötig. Dies beeinflußt wiederum die Wirtschaftlichkeit.

Mit den Merkmalen gemäß dem Anspruch 3 ist ein optimaler Wirkungsgrad bei der Wärmeübertragung erreicht. Im Gegensatz zum MSF-Verfahren wird beim Einsatz von VR-Verfahren etwa im Verhältnis 2,5 zu 1 Primärenergie eingespart (W. Lorch, Handbook of Water Purification, second edition 1987, S. 457, Verlag Ellis Horward Limited Chichester). Das hier beschriebene Verfahren ist hinsichtlich des Gesamtenergieverbrauches etwa den VR-Verfahren gleichzusetzen. Zur Erzeugung von 10 m³/h Destillat werden etwa 480 KW/h benötigt. Dies entspricht einem Verbrauch von 0,048 KW/kg Detillat entsprechend 41,3 kcal/kg Destillat.

Bei einem ersten Ausführungsbeispiel vorliegender Erfindung ist gemäß den Merkmalen des Anspruchs 9 erreicht, daß durch eine im Zweikreissystem integrierte Heizung, die nur geringfügig über der Temperatur der vorerwärmten Teilströme liegende Siedetemperatur erreicht wird.

Bei einem zweiten Ausführungsbeispiel vorliegender Erfindung wird gemäß den Merkmalen des Anspruchs 4 bzw. denen des Anspruchs 10 und/oder 11 eine bezüglich des Zweikreissystems externe Heizeinrichtung vorgesehen, so daß sich eine Anpassung an die jeweiligen energetischen Gegebenheiten am Aufstellungsort erreichen läßt.

Da alle Anlagenteile dem aggressiven Meerwasser ausgesetzt sind, wird gemäß den Merkmalen des Anspruchs 12 eine korrosionsbeständige lochfraßresistente Ausbildung der Wärmeübertrager erreicht.

Mit den Merkmalen gemäß Anspruch 5 bzw Anspruch 13 ist eine weitere Erhöhung der Strömungsgeschwindigkeit im Verdampfer und damit eine weitere Verbesserung der genannten positiven Prozeßgrößen erreicht.

Gemäß den Merkmalen des Anspruchs 6 bzw. 14 ist eine Dosierstation für das Beimengen eines Additivs in relativ geringer Dosierung vorgesehen.

Beim Einsatz von Trinkwasseranwendungen ist eine Nachbereitung des Destillats nötig, da der Genuß von größeren Mengen destillierten Wassers den Mineralhaushalt des menschlichen Körpers stört. Es müssen deshalb dem Trinkwasser nach WHO-Standard bestimmte Mineralien und dgl. zugeführt werden. Bei der Anwendung des Wasserdestillats zur Bewässerung von Agraranlagen ist grundsätzlich keine Nachbehandlung nötig. Der geringe Mineralgehalt verhindert die schnelle Versalzung der Böden durch den Salzeintrag durch das Bewässerungswasser. Die Böden bleiben somit lange Zeit fruchtbar, ohne daß ein Bodenaustausch oder eine aufwendige Spülung des Bodens notwendig ist. Es können jedoch nach Wunsch dem Destillat spezielle Beimengungen, wie Düngemittel, Insektizide und dgl. zudosiert werden. Dies kann in der oben beschriebenen alternativen Weise mit Hilfe der Merkmale gemäß Anspruch 7 bzw. 15 durchgeführt werden.

Um ein einfaches Anfahren der Vorrichtung nach dem zweiten Ausführungsbeispiel vorliegender Erfindung zu erreichen, sind die Merkmale gemäß Anspruch 16 vorgesehen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer Darstellung ein Fließbild einer Vorrichtung zur thermischen Überdruck-Meerwasserentsalzung gemäß einem ersten Ausführungsbeispiel vorliegender Erfindung,
- Figur 2: eine der Figur 1 entsprechende Darstellung einer Vorrichtung zur thermischen Überdruck-Meerwasserentsalzung gemäß einem zweiten Ausführungsbeispiel vorliegender Erfindung und
- Figur 3: in vergrößerter schematischer Darstellung denjenigen Teil der Vorrichtung, der das Zweikreis-Prozeßsystem beinhaltet.

Die in der Zeichnung gemäß zweier Ausführungsbeispiele vorliegender Erfindung dargestellte Vorrichtung 11 bzw. 11' dient zum energiesparenden thermischen Überdruck-Meervasserentsalzen, wobei keimfreies Wasserdestillat höchster Qualität erzeugt wird, und wobei die Vorrichtung insbesondere für kleine bis mittlere Leistungen ausgelegt ist. Das keimfreie Wasserdestillat soll insbesondere als Trinkwasser oder der Bewässerung dienen. Bei den dargestellten Ausführungsbeispielen wird ein Zweikreissystem 12 mit einem unter geringem Überdruck arbeitenden Primärsystem 13, 13' für das zu entsalzende Meerwasser und einem räumlich davon getrennten in sich geschlossenen Sekundärsystem 14, 14' verwendet, das mittels einer Wärmepumpe unter Überdruck gefahren wird.

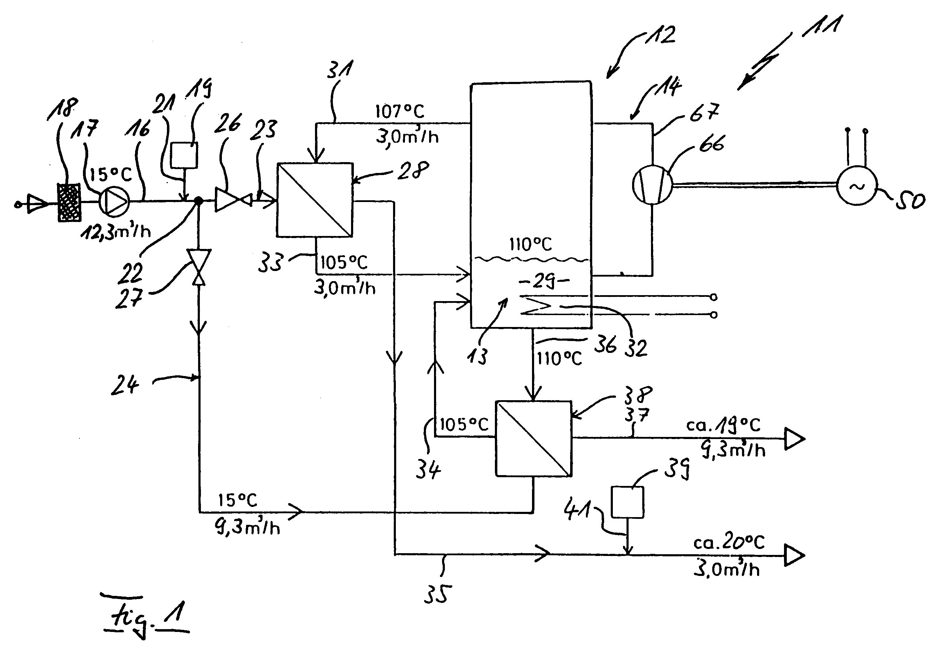

Gemäß dem in Figur 1 dargestellten ersten Ausführungsbeispiel einer Überdruck-Meerwasserentsalzungsvorrichtung 11 wird über eine in nicht dargestellter Weise ins Meer eingetauchte Rohrleitung 16 zu entsalzendes Meerwasser von einer Pumpe 17 über ein davor liegendes Filtersystem 18 gefördert, in welchem das kalte Meerwasser von groben Partikeln von bspw. größer 200 µm befreit wird. Die Pumpe 17 ist derart ausgelegt, daß das angesaugte kalte Meerwasser im Druck soweit erhöht wird, wie dies gerade zur Überwindung aller Druckverluste in der Vorrichtung 11 notwendig ist und ein gewünschter Restüberdruck am Vorrichtungsausgang noch gegeben ist. Beim dargestellten Ausführungsbeispiel herrscht nach der Pumpe 17 ein Überdruck von bspw. etwa 2 bis 3 bar, während ausgangsseitig ein geringer Überdruck von bspw. etwa 0,25 bis 0,30 bar an der Destillationssäule, bzw. etwa 0,1 bar nach dem letzten Wärmeübertrager 38 herrscht. Nach der Pumpe 17 ist die Rohrleitung 16 mit einer Dosierstation 19 verbunden, über deren Verbindungsleitung 21 ein Additiv dem Meerwasser hinzugefügt wird. Das Additiv, das nur in relativ geringen Mengen hinzugefügt werden muß, dient dazu, die Kristallbildung von Anhydrit (CaSo₄) zu verringern bzw. zu verändern oder ganz zu vermeiden und somit ein Zuwachsen von Bauteilen, insbesondere des Verdampfers im Zweikreissystem 12 zu verhindern. Dieses Additiv ist je nach Verwendung des Wasserdestillats gewählt; es muß also bspw. auch zur Trinkwassererzeugung zugelassen und umweltverträglich sein.

Die Rohrleitung 16 verzweigt sich nach einem Verteiler 22 in eine erste Zuleitung 23 und eine zweite Zuleitung 24, in denen jeweils ein Drosselorgan 26 bzw. 27 vorgesehen ist. Dadurch wird der in der Rohrleitung 16 zugeführte Meerwasserstrom in einen ersten Teilstrom in der ersten Zuleitung 23 und in einen zweiten Teilstrom in der zweiten Zuleitung 24 aufgeteilt. Die quantitative Aufteilung der beiden Teilströme erfolgt durch die beiden Drosselorgane 26 und 27 in stationarer oder geregelter Weise.

In die erste Zuleitung 23 ist die eine Seite eines ersten Wärmeübertragers 28 geschaltet, dessen andere Seite in einer Destillatleitung 31 liegt, die mit dem ausgangsseitigen Ende des Primärsystems 13 verbunden ist. Der aus der einen Seite des erster Warmeübertragers 28 austretende Abschnitt 33 der ersten Zuleitung 23 ist mit dem eingangsseitigen Ende des Primärsystems 13, d.h. einer Destillationsblase 29 verbunden, in die der erste Teilstrom des Meerwassers eingeleitet wird

Während also das Primärsystem 13 des Zweikreis-Wärmepumpensystems 12 mit dem einen Volumenteilstrom des zu entsalzenden Meerwassers gespeist wird, ist das Sekundärsystem 14 in sich geschlossen und besitzt als Sekundärmedium bspw. Rohwasser in Form von Süßwasser In nicht dargestellter Weise kann das Sekundärsystem 14 mit einer absperrbaren Rohrleitung zum erstmaligen Zuführen von Sekundärmedium verbunden sein. In der Destillationsblase 29 des Primärsystem 13 ist beim dargestellten Ausführungsbeispiel eine Fremdheizung 32 installiert, die beim dargestellten Ausführungsbeispiel elektrisch betreibbar ist.

Bodenseitig ist die Destillationsblase 29 des Primärsystems 13 mit einer Abzugsrohrleitung 36 verbunden, in die die andere Seite eines zweiten Wärmeübertragers 38 eingebracht ist. Dem freien ausgangsseitigen Abschnitt 37 der Abzugsrohrleitung 36 wird Meerwasserabschlämmung entnommen. Mit anderen Worten, die Abzugsrohrleitung 36 dient dem Rücklauf von nicht entsalztem bzw. nicht verdampften Meerwasser bspw. zurück ins Meer. Mit der einen Seite dieses zweiten Wärmeubertragers 38 ist die zweite Zuleitung 24 verbunden, so daß der zweite Volumenteilstrom den zweiten Wärmeübertrager 38 durchströmt und über den ausgangsseitigen Abschnitt 34 der zweiten Zuleitung 24 ebenfalls in die Destillationsblase 29 des Primärsystems 13 eingeleitet wird.

Die Destillatleitung 31 ist an ihrem ausgangsseitigen Abschnitt 35 mit einer Konditionierungsstation 39 verbunden, über deren Verbindungsleitung 41 Konditionierungsmittel dem keimfreien Wasserdestillat höchster Qualität zugeführt wird. Die Art des Konditionierungsmittels ist davon abhangig, wofür das Wasserdestillat verwendet werden soll, also ob es bspw. als Trinkwasser Verwendung finden oder der Bewässerung dienen soll. Beispielsweise sind im einen Fall als Konditionierungsmittel verschiedene Mineralstoffe und Salze bzw. im anderen Fall bspw. Düngemittel oder dgl. vorgesehen.

Die in Figur 1 schematisch dargestellten Wärmeübertrager 28 und 38 sind in demontierbarer Plattenaustauschertechnik aus Titan hergestellte Wärmeübertrager, die eine hohe Effizienz aufgrund geringer Wandstärken und Druckverluste und eine hohe Korrosionssicherheit aufweisen und sehr wirtschaftlicher Weise herstellbar sind.

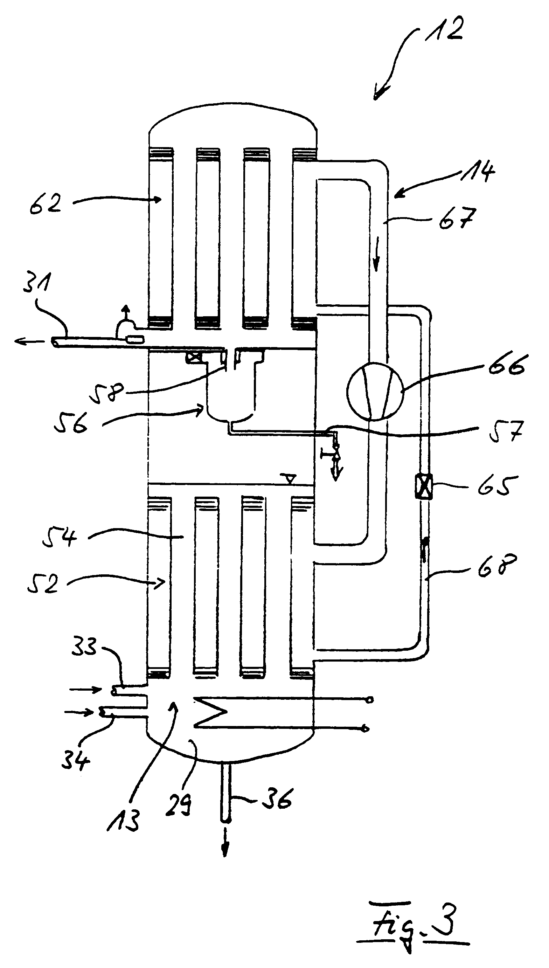

Bevor auf das Verfahren zum thermischen Überdruck-Meerwasserentsalzen anhand der in Figur 1 dargestellten Vorrichtung 11 eingegangen wird, soll zunächst anhand der Figur 3 die Arbeitsweise des Zweikreis-Wärmepumpensystems 12 beschrieben werden. Das durch die beiden Zuleitungen 23 bzw. 33 und 24 bzw. 34 in das Primarsystem 13 eintretende Meerwasser, das im Gegenstrom zum aus der Destillatleitung 31 austretenden Destiallat bzw. zur aus der Abzugsrohrleitung 36 austretenden Abschlämmung dem ersten bzw. zweiten Warmeübertrager 28, 38 bis knapp unterhalb der Destilliertemperatur vorgewärmt worden ist, gelangt, wie erwähnt in die Destillationsblase 29, die unterhalb eines ersten Wärmetauschers 52, der im Primärsystem 13 als Verdampfer arbeitet, angeordnet ist. Von der Destillationsblase 29 aus steigt das zu behandelnde Meerwasser in den Verdampferbereich 54 des ersten Warmetauschers 52 vorteilhaft auch aus Titan hergestellt, der bspw. in Form eines Wellflächenverdampfers ausgebildet ist. Der in den sogenannten Rohren des Verdampferbereichs 54 des ersten Wärmetauschers 52 erzeugte Destillatdampf steigt nach oben und passiert ein Zyklon 56, in welchem die Trennung von mitgerissenen Tröpfchen und Partikeln aufgrund einer sehr hohen Zentrifugalbeschleunigung des Dampfes stattfindet. Durch einen physikalischen Effekt bildet sich zwischen Zykloninnenwand und dem Destillatdampf ein Wasserfilm von nur geringer Menge, der aufgrund des inneren Strömungsfeldes in den unteren Teil des Zyklons 56 wandert und deshalb nicht in das Destillat gelangt. Über ein bodenseitiges Rohr 57 wird das zusammenlaufende Wasser abgeführt (ca. 0,2 % der Destillatleistung der Anlage). Der Destillatdampf selbst kommt nicht an den kritischen Stellen der höchsten Geschwindigkeit mit der Metallfläche in Berührung, sondern gelangt über das in der Mitte des Zyklons 56 angebrachte Tauchrohr 58 in einen zweiten Wärmetauscher 62, der im Primärsystem 13 als Kondensator wirkt. Bei diesem zweiten Wärmetauscher 62, der ebenfalls bspw. in Form eines Wellflächenverdampfers/-kondensators ausgebildet ist, durchströmt der aus dem Zyklon 56 austretende Dampf beispielsweise nach einer Richtungsänderung um 90° die sogenannten Spalträume zwischen den aufrechten Wellflächenplatten und kondensiert dabei. Das Kondensat in Form des Meerwasserdestillats verläßt über die Destillatleitung 31 das Primärsystem 13 noch mit leichtem Überdruck.

Die im Primärsystem 13 an dem als Kondensator wirkenden zweiten Wärmetauscher 62 freiwerdende Kondensationswärme des Primärmediums (zu entsalzendes Meerwasser bzw. Meerwasserdampf) wird benutzt, um im Sekundärsystem eine Verdampfung des Sekundärmediums durchzuführen, das nur einmal in das Sekundärsystem 14 eingespeist wird. Der entstehende Sekundärmediumdampf im Sekundärsystem wird über einen nicht dargestellten herkömmlichen Tropfenabscheider vom oberen Teil des Zweikreissystems 12 in einen Verdichter 66, der von einem Elektromotor 50 angetrieben ist, geführt. Im Verdichter 66 findet eine Kompression und eine damit verbundene Temperaturerhöhung statt. Der den Verdichter 66 verlassende Dampf des Sekundärmediums ist heiß genug, um im ersten Wärmetauscher 52, der im Sekundärsystem 14 als Verdampfer wirkt, im wesentlichen als alleiniges Heizmedium zum Verdampfen des vorerwärmten gefilterten Meerwassers zu dienen. Durch die Kondensation des Dampfes des Sekundärmediums im ersten Wärmetauscher 52 wird in diesem das Meerwasser verdampft. Das anfallende Kondensat des Sekundärmediums verläßt den erster Wärmetauscher 52 und gelangt über ein Rohr 68 und über ein Drosselventil 65 in den oberen zweiten Wärmetauscher 62, der im Sekundärsystem 11 als Verdampfer arbeitet. Das Kondensat des Sekundärmediums strömt in einen Bodenbereich des zweiten Wärmetauschers 62 ein und strömt als Dampf durch die Wärmetauscher-Rohrräume senkrecht nach oben und von dort über das Rohr 67 zurück zum Verdichter 66. Es versteht sich, daß die beiden Systeme 13 und 14 vollkommen voneinander getrennt sind und daß in entsprechender Weise die beiden Warmetauscher 52 und 62 ausgebildet sind.

Gemäß dem in Figur 1 dargestellten Ausführungsbeispiel wird das Meerwasser bei etwa 15°C in die Vorrichtung 11 eingespeist, wobei bspw. ein Gesamtvolumenstrom von 12,3 m³/h mit Hilfe der Pumpe 17 erreicht wird. Die beiden Drosselorgane 26 und 27 sind derart eingestellt, daß der erste Volumenstrom in der ersten Zuleitung 23 etwa 3,0 m³/h und der zweite Volumenstrom in der zweiten Zuleitung 24 etwa 9,3 m³/h beträgt. Die Größe des ersten Volumenstroms in der ersten Zuleitung 23 wird durch den Destillatvolumenstrom in der Destillatleitung 31 bestimmt, und zwar beim Ausführungsbeispiel derart, daß beide Volumenströme etwa gleichgesetzt werden. Das aus dem Primärsystem 13 des Zweikreissystems 12 bei einer Temperatur von etwa 107°C austretende und durch den ersten Wärmeübertrager 28 strömende Destillat bewirkt, daß der erste Volumenstrom in der ersten Zuleitung 23 nach Durchströmen des ersten Wärmeübertragers 28 eine Temperatur von etwa 105°C erreicht hat und mit dieser Temperatur in die Destillationsblase 29 des Primärsystems 13 eintritt. Das Destillat kühlt aur etwa 20°C ab und tritt bei etwa 0,1 bar aus. Der zweite Volumenstrom in der zweiten Zuleitung 24 wird in dem zweiten Wärmeübertrager 38 auf eine Temperatur von ebenfalls im Bereich von 105°C erwärmt, da durch diesen zweiten Wärmeübertrager 38 die aus der Destillationsblase 29 fließende Abschlämmung mit etwa 110°C durch den zweiten Wärmeübertrager 38 strömt. Die Abschlammung ist am Ende des zweiten Wärmeübertragers 38 auf etwa 19°C abgekühlt und tritt unter etwa 0,1 bar aus. Der aus der Destillationsblase 29 des Primärsystems 13 austretende Abschlämmvolumenstrom hat dieselbe Größe wie der zweite Volumenstrom in der zweiten Zuleitunq 24, beträgt also etwa 9,3 m³/h. Nach der Erwärmunq auf etwa 105°C, mit der die beiden Volumenströme in die Destillationsblase 29 eintreten, wird das so erwärmt Meerwasser mit Hilfe der Fremdheizung 32 auf Siedetemperatur gebracht, die in dem unter Überdruck stehenden Primärsystem 13 bei etwa 110°C liegt. Die für die Verdampfung verbleibende Temperaturdifferenz wird, wie erwähnt, durch den Wärmepumpenkreislauf des Sekundärsystems 14 aufgebracht. In erfindungsgemäßer Weise wird das Verfahren zur thermischen Überdruck-Meerwasserentsalzung bei einer niedrigen Aufkonzentration und damit einer hohen Abschlämmrate betrieben. Beim erfindungsgemäßen Verfahren wird ein Konzentrationsfaktor CF, der das Verhältnis von gesamter Einspeisemenge an Meerwasser zu, Abschlämm-Menge darstellt, im Bereich zwischen größer 1 und kleiner 2, vorzugsweise zwischen 1,3 und 1,4 eingestellt. Beim dargestellten Ausführungsbeispiel betragt CF = 12,3 m³/h / 9,3 m³/h ≈ 1,33. Bei einem derartig gewählten CF ist das Korrosionsrisiko innerhalb des Primarsystems 13 bzw. innerhalb der Vorrichtung 11 relativ gering, da der Salzgehalt in der Destillationsblase 29 auf maximal 45 g/kg ansteigt, wenn ein Meerwassersalzgehalt von ca. 34 g/kg vorausgesetzt wird. Das Verfahren arbeitet daher in einem Bereich knapp oberhalb der Sättigungslinie von Anhydrit, so daß über die Dosierstation 19 Additive in nur sehr geringen Mengen zugegeben werden müssen. Durch diesen niedrigen CF-Wert ergibt sich eine hohe Meerwasser-Zirkulation aufgrund der dadurch bedingten hohen Abschlämmrate. Dies verbessert die Wärmeübergänge im Destilliersystem 13 und verhindert ebenfalls die Bildung von Ablagerungen im System.

Das Starten der Vorrichtung 11 gemäß Figur 1 erfolgt in der Weise, daß die Destillationsblase 29 des Primärsystems 13 mit zu entsalzendem Meerwasser bis zum üblichen Füllstand gefüllt und mit Hilfe der Fremdheizung 32 auf etwa 110°C aufgeheizt wird Dann wird der Kompressor des Sekundärsystems 14 zugeschaltet, so daß der thermische Prozeß zur Überdruckmeerwasserentsalzung beginnen kann.

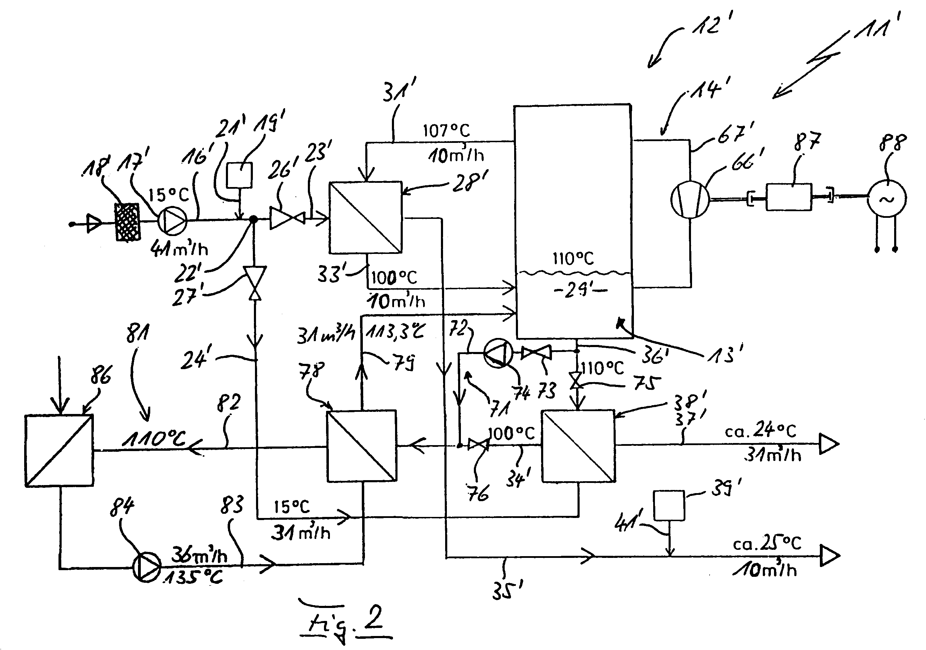

Die in Figur 2 gemäß einem zweiten Ausführungsbeispiel dargestellte Vorrichtung 11' zum thermischen Überdruck-Meerwasserentsalzen, um keimfreies Wasserdestillat höchster Qualität in energiesparender Weise zu erzeugen, entspricht anlagetechnisch und verfahrenstechnisch im wesentlichen der Vorrichtung 11 qemäß Figur 1. Diejenigen Bauteile, die sowohl bei der Vorrichtung 11 als auch bei der Vorrichtung 11' in entsprechender Weise Verwendung finden, sind in Figur 2 deshalb jeweils mit derselben Bezugsziffer und einem Strich versehen. Die Unterschiede zwischen beiden Vorrichtungen 11' und 11 bestehen insbesondere darin, daß die Ausführung der Fremdheizung zur Begleitung und zum Starten des Prozesses in unterschiedlicher Weise ausgebildet ist. Ein weiterer Unterschied besteht in der höheren Destillaterzeugung pro Zeiteinheit und damit in den vorgegebenen höheren Volumenströmen. Auch die Vorrichtung 11' gemäß Figur 2 arbeitet mit einem Konzentrationsfaktor CF im Bereich zwischen größer 1 und kleiner 2, in bevorzugter Weise zwischen 1,3 und 1,4 und hier ebenfalls bei einem CF ≈ 1,33.

Durch die Rohrleitung 16' wird mit Hilfe der Pumpe 17' ein gefilteter (Filter 18') Meerwasservolumenstrom von 41 m³/h gefördert. Nach der Zuführung von Additiven (Dosierstation 19') werden mit Hilfe der Drosselorgane 26' und 27' ein erster Volumenstrom von 10 m³/h in der ersten Zuleitung 23' und ein zweiter Volumenstrom von 31 m₃/h in der zweiten Zuleitung 24' erzeugt. Der erste Volumenstrom wird im ersten Wärmeübertrager 28' durch den etwa 107°C heißen Destillatstrom von 10 m³/h auf etwa 100°C erwärmt und in die Destillationsblase 29' des Primärsystems 13' gebracht. Der zweite Volumenstrom wird im zweiten Wärmeübertrager 38' von dem etwa 110°C heißen Abschlämmstrom von 31 m³/h aus der Destillationsblase 29' auf ebenfalls etwa 100°C gebracht. Dieser zweite Volumenstrom durch den Abschnitt 34' der zweiten Zuleitung 24' wird nun nicht unmittelbar sondern mittelbar über die eine Seite eine dritten Wärmerübertragers 78 und eine Rohrleitung 79 zur Destillationsblase 29' des Primärsystems 13' gefördert. Am Austritt des dritten Wärmeübertragers 78 besitzt der zweite Volumenstrom von 31 m³/h eine Temperatur von etwa 113,3°C. Durch Mischen der beiden Volumenströme ergibt sich eine Mischungstemperatur des zu verdampfenden Meerwassers in der Destillationsblase 29' von etwa 110°C, was der Siedetemperatur im Primärsystem 13' entspricht. Die Verdampfung erfolgt auch hier mit Hilfe des Wärmepumpenkreislaufs des Sekundärsystems 14'.

Der dritte Wärmeübertrager 78 ist Teil einer Heizeinrichtung 81, die in ihrer umlaufenden Rohrleitung 82, 83 ein Wärmeträgermedium, bspw. Öl führt, das durch eine Pumpe 84 umgewälzt wird. Dieses Wärmeträgermedium strömt sowohl durch die andere Seite des dritten Wärmeübertragers 78 als auch durch die eine Seite eines öl- oder gasbeheizten Kessels 86. Im Kessel 86 wird das Wärmeträgermedium, dessen Volumenstrom bspw. 36 m³/h beträgt, auf 135°C erwärmt und ist nach Durchlauf durch den dritten Wärmeübertrager 78 auf etwa 111°C abgekühlt.

Der Antrieb des Verdichters 66' des sekundärsystems 14' erfolgt nicht mit Hilfe eines Elektromotors wie beim Ausführungsbeispiel nach Figur 1 sondern mit Hilfe eines Dieselaggregats 87, das außerdem einen Generator 88 antreibt, der elektrische Energie fur die Steuerung der Vorrichtung 11' und den Antrieb der Pumpen, Ventile und dgl. liefert.

Zum Starten der Vorrichtung 11' nach Figur 2, ist ein Bypaß 71 für den zweiten Wärmeübertrager 38' vorgesehen. Hierzu verläuft zwischen der Abzugsrohrleitung 36' und dem Abschnitt 34' der zweiten Zuleitung 24' eine Bypaßleitung 72, die mit einem Absperrventil 73 und einer Pumpe 74 bestückt ist. Außerdem ist in Strömungsrichtung nach der Bypaßleitung 72 in der Abzugsrohrleitung 36' ein Ventil 75 und in Strömungsrichtung vor der Bypaßleitung 72 im Zuleitungsabschnitt 34' ein Absperrventil 76 eingebaut. Zum Starten des Prozesses wird zuerst die Destillationsblase 29' mit Meerwasser über den zum üblichen Füllstand befüllt, um für die Aufheizphase genügend Wasser zu besitzen. Bei geschlossenen Ventilen 75 und 76 und offenem Ventil 73 in der Bypaßleitung 72 und bei eingeschalteter Pumpe 74 wird Meerwasser über den dritten Wärmeübertrager 78 in die Destillierblase 29' im Kreislauf umgepumpt. Bei zugeschalteter Heizeinrichtung 81 wird bei diesen Ventilstellungen solange gearbeitet, bis in der Destillationsblase 29' ein Ansaugüberdruck von ca. 0,1 bis 0,2 bar, entsprechend einer Siedetemperatur von etwa 110°C, anliegt. Danach wird der Verdichter 66' im Sekundärsystem 14' zugeschaltet und gleichzeitig werden die Ventile 75 und 76 geöffnet und das Ventil 73 geschlossen und die Pumpe 74 ausgeschaltet.

Zu erwähnen bleibt noch, daß bei diesem Ausführungsbeisp8el das Destillat aus der Destillatleitung 31' bei einer Temperatur von etwa 25°C bei einem Druck von etwa 0,1 bar und einem Volumenstrom von 10 m³/h austritt. Der Abschlammstrom von 31 m³/h besitzt eine Temperatur von noch etwa 24°C und tritt bei einem Überdruck von etwa 0,1 bar aus dem Abschnitt 37' der Abzugsrohrleitung 36' aus.

Betreibt man die Vorrichtung 11 bzw. 11' mit einem CF zwischen 1,3 - 1,4 wie z.B. CF = 1,33 im Ausführungsbeispiel, wird erreicht daß im Verdampfer 52 des Primärsystems 13, 13' für das Meerwasser ein Durchsatz gefahren wird, der ca. 3-fach höher als die Destillatmenge ist. Somit ist die Strömungsgeschwindigkeit im Verdampfer ebenfalls 3-fach höher, als dies bei einer Destillationsanlage ohne Abschlämmung (diskontinuierliche Fahrweise vorausgesetzt) der Fall ist. Eine derartige Erhöhung der Strömungsgeschwindigkeit im Verdampfer bewirkt folgende für den Prozeß positive Eigenschaften:
a) Verbesserung der Wärmeübergangszahl im Verdampfer,
b) geringe Neigung zur Bildung von Ablagerungen an den Verdampferwandungen,
c) geringe Neigung zur Korrosion da Beläge, die z.B bei Spannungsrißkorrosion in Spalten eine wesentliche Rolle spielen an ihrer Bildung gehindert werden,
d) kleinere Dosiermengen, falls Additive zum Anti-Scaling benötigt werden,
e) einen höheren Umlauffaktor im Verdampfer ohne zusätzliche Umwälzpumpe und
f) kleine nachteilige Erhöhung des Druckverlustes im Wärmeübertrager.
Der höhere Umlauffaktor bewirkt eine längere Verweilzeit des Meerwassers bei Verdampfungstemperatur. Dies hat den Vorteil, daß der Fₒ-Wert (Maß für die sterilisationsgüte des Prozesses) erhöht wird. Somit ist die Abtötung der im Meerwasser befindlichen Mikroorganismen sehr viel sicherer, als dies bei nur kurzer Verweilzeit der Fall ist, gewährleistet.

Gemäß nicht dargestellten Varianten ist zur weiteren Erhöhung der Strömungsgeschwindigkeit im Verdampfer 52 und somit zur Steigerung der beschriebenen positiven Prozeßgrößen der Verdampfer 52 des Primärsystems 13, 13' vorteilhaft als Flüssigkeitslaufverdampfer ausgeführt. Gemäß der einen Variante erfolgt ein natürlicher bzw. selbsttätiger Flüssigkeitsumlauf dadurch, daß die sich in den Verdampferrohren bildenden Dampfblasen nach dem Mammutpumpenprinzip die siedende Lösung nach oben treiben und ein Kammersystem außerhalb der Verdampferrohre den Rücklauf der Lösung ermöglicht. Dies kann bspw. ein Verdampfer nach Art eines Robert-verdampfers sein. Gemäß der anderen Variante wird anstelle eines Verdampfers mit selbsttätigem Umlauf ein Verdampf er mit Zwangsumlauf und außenliegendem Heizkörper eingesetzt werden. Durch Veränderung der Leistung einer Umlaufpumpe kann die Strömungsgeschwindigkeit direkt vorgegeben werden.

Es versteht sich, daß Volumenströme anderer Größenordnungen möglich sind und daß die Art und Weise der Fremdheizung einerseits von der Leistungsfähigkeit der Vorrichtung 11 bzw. 11' und andererseits vom Einsatzort abhängig ist. Die Abhängigkeit von Einsatzort betrifft insbesondere die Frage, ob elektrische Energie oder ausschließlich Öl bzw. Gas zur Verfügung steht. Wesentlich ist, daß der Konzentrationsfaktor CF unter dem Wert 2 angesetzt wird, damit die Vorrichtung 11 bzw. 11' in einem Bereich niedriger Aufkonzentratlon arbeiten kann, was in jedem Fall die Bildung von Gips verhindert und die Kristallbildung von Anhydrit auf ein Minimum begrenzt ist, so daß Additive zur vollständigen Verhinderung der Anhydrit-Kristallbildung in nur relativ geringen Mengen zugesetzt werden müssen.

## Patentansprüche

1. Verfahren zum Entsalzen von Meerwasser, bei dem das Meerwasser innerhalb eines Primärsystems und ein Sekundärmedium, vorzugsweise Rohwasser, innerhalb eines einen Verdichter enthaltenden, vom Primärsystem getrennten, in sich geschlossenen Sekundärsystems verdampft und kondensiert wird, indem das Meerwasser durch Erhitzen an dem zuvor im Verdichter verdichteten und weiter erwärmten Sekundärmedium verdampft, anschließend der Meerwasserdampf durch eine Zyklon geführt und durch darauffolgende Kondensation des Meerwasserdampfes das im Sekundärsystem wieder entspannte Sekundärmedium verdampft wird, und bei dem der dem Primärsystem zugeführte Gesamt-Meerwasserstrom in einen ersten Teilstrom und einen zweiten mindestens gleich großen Teilstrom unterteilt wird, von denen der erste Teilstrom in einem vom heißen Wasserdestillat am Ausgang des Primärsystems durchströmten ersten Wärmeübertrager und der zweite Teilstrom in einem von der abgezogenen heißen Abschlämmung durchströmten zweiten Wärmeübertrager auf eine Temperatur nahe der Siedetemperatur in Primärsystem gebracht wird und daß das als Konzentrationsfaktor (CF) bezeichnete Verhältnis von zugeführter Gesamtmeerwassermenge pro Zeiteinheit zur Abschlämm-Menge pro Zeiteinheit zwischen einem Wert von 1,3 und einem Wert von 1,4 gewählt wird.

2. Verfahren nach Anspruch 1, dadurch gekennzeichnet, daß ein Konzentrationsfaktor (CF) von etwa 1,33 gewählt wird.

3. Verfahren nach Anspruch 1 oder 2, dadurch gekennzeichnet, daß die Größe des ersten Teilstroms etwa gleich der Größe des Destillatstromes und die Größe des zweiten Teilstromes etwa gleich der Größe des Abschlämmstromes gewählt wird.

4. Verfahren nach mindestens einem der Ansprüche 1 bis 3, dadurch gekennzeichnet, daß der zweite Teilstrom ein weiteres Mal erwärmt wird, und zwar auf eine über der Siedetemperatur im Primärsystem liegende Temperatur derart, daß die Mischung aus erstem und zweitem Teilstrom die im Primärsystem herrschende Siedetemperatur besitzt.

5. Verfahren nach mindestens einem der vorhergehenden Ansprüche, dadurch gekennzeichnet, daß das Meerwasser durch einen im Primärsystem liegenden Umlaufverdamfer geführt wird.

6. Verfahren nach mindestens einem der vorhergehenden Ansprüche, dadurch gekennzeichnet daß dem Gesamtmeerwasserstrom in relativ geringen Mengen ein Additiv zur Verhinderung des Kristallwachstums von Anhydrit zugeführt wird.

7. Verfahren nach mindestens einem der vorhergehenden Ansprüche, dadurch gekennzeichnet, daß das keimfreie Wasserdestillat konditioniert wird.

8. Vorrichtung zur Durchführung des Verfahrens zum Entsalzen von Meerwasser gemäß einem der Ansprüche 1-7, mit einem Primärsystem (13; 13') für das Meerwasser und einem davon getrennten, einen Verdichter (66; 66') enthaltenden, in sich geschlossenen Sekundärsystem (11; 11') zur Wärmeübertragung, wobei das Primärsystem (13; 13') mit dem Sekundärsystem (11; 11') durch einen ersten Wärmetauscher (52) zur Verdampfung des Meerwassers und einen zweiten Wärmetauscher (62) zur Kondensation des Meerwasserdampfes gekoppelt ist und mit einem im Brüdenraum des Primärsystems (13; 13') zwischen dem Verdampfer (52) und dem Kondensator (62) angeordneten Zyklon (56), gekennzeichnet durch einen den dem Primärsystem (13; 13') zugeführten Gesamt-Meerwasserstrom in einen ersten Teilstrom und einen zweiten mindstens gleich großen Teilstrom unterteilenden Verteiler (22; 22'), durch einen ersten vom heißen Wasserdestillat am Ausgang des Primärsystem (13; 13') durchströmten ersten Wärmeübertrager (28; 28'), in welchem der erste Teilstrom auf eine Temperatur nahe der Siedetemperatur im Primärsystem (13; 13') gebracht werden kann, durch einen von der abgezogenen heißen Abschlämmung durchströmten zweiten Wärmeübertrager (38; 38') in welchem der zweite Teilstrom auf eine Temperatur nahe der Siedetemperatur im Primärsystem (13; 13') gebracht werden kann, und durch zwei vorgeschaltete Drosselorgane 26, 27; 26', 27') über die ein Konzentrationsfaktor (CF), das Verhältnis von zugeführter Gesamt-Wassermenge pro Zeiteinheit zur Abschlämm-Menge pro Zeiteinheit, zwischen einem Wert von 1,3 und einem Wert von 1,4, vorz. etwa 1,33 einstellbar ist.

9. Vorrichtung nach Anspruche 8, dadurch gekennzeichnet, daß in einer Destillatblase (29) eine Heizvorrichtung (32) vorgesehen ist.

10. Vorrichtung nach Anspruch 8 oder 9, dadurch gekennzeichnet, daß ein dritter Wärmeübertrager (78) vorgesehen ist, der einerseits vom zweiten Teilstrom in der zweiten Zuleitung (24') durchströmt ist und andererseits Teil einer externen Heizeinrichtung (81) ist.

11. Vorrichtung nach Anspruch 10, dadurch gekennzeichnet, daß die öl- oder gasbetriebene Heizeinrichtung (81) mit einem zwangsweise umlaufenden und den dritten Wärmeübertrager (78) durchströmenden Wärmeträgermedium versehen ist.

12. Vorrichtung nach mindestens einem der Ansprüche 8 bis 11, dadurch gekennzeichnet, daß die Wärmeübertrager (28, 38; 28', 38', 78) in Plattenaustauschertechnik aus Titan hergestellt sind.

13. Vorrichtung nach mindestens einem der Ansprüche 8 bis 12, dadurch gekennzeichnet, daß der Verdampfer (52) im Primärsystem (13; 13') durch einen Umlaufverdampfer mit natürlichem bzw. selbsttätigem oder mit zwangsweisem Flüssigkeitsumlauf gebildet ist.

14. Vorrichtung nach mindestens einem der Ansprüche 8 bis 13, dadurch gekennzeichnet, daß die die Gesamt-Meerwassermenge zuführende Rohrleitung (16; 16') mit einer Dosierstation (19; 19') zum Zuführen eines Additivs verbunden ist.

15. Vorrichtung nach mindestens einem der Ansprüche 8 bis 14, dadurch gekennzeichnet daß die Destillatleitung (31; 31') mit einer Konditionierungsstation (39; 39') verbunden ist.

16. Vorrichtung nach mindestens einem der Ansprüche 8 und 10 bis 15, dadurch gekennzeichnet, daß der zweite Wärmeübertrager (78) mit einem absperrbaren Bypaß (71) versehen ist.

## Claims

1. Process for desalinating sea water, in which the sea water within a primary system and a secondary medium, preferably raw water, within a closed secondary system, which contains a compressor and is separated from the primary system, is evaporated and condensed by evaporating the sea water through heating of the secondary medium, which has been previously compressed and further heated in the compressor, subsequently passing the sea-water vapour through a cyclone and, through subsequent condensation of the sea-water vapour, evaporating the secondary medium which has relaxed again in the secondary system, and in which the total sea-water flow supplied to the primary system is subdivided into a first partial flow and a second partial flow of at least the same size, of which the first partial flow is brought to a temperature close to the boiling temperature in [lacuna] primary system in a first heat transfer means through which hot water distillate flows at the exit of the primary system, and the second partial flow is brought to a temperature close to the boiling temperature in [lacuna] primary system in a second heat transfer means through which the discharged hot elutriate flows, and that [sic] the ratio of the total sea-water quantity supplied per unit time to the elutriation quantity per unit time, which is referred to as the concentration factor (CF), is chosen to be between a value of 1.3 and a value of 1.4.

2. Process according to Claim 1, characterized in that a concentration factor (CF) of approximately 1.33 is chosen.

3. Process according to Claim 1 or 2, characterized in that the size of the first partial flow is chosen to be approximately equal to the size of the distillate flow and the size of the second partial flow is chosen to be about equal to the size of the elutriation flow.

4. Process according to at least one of Claims 1 to 3, characterized in that the second partial flow is heated once more, specifically to a temperature lying above the boiling temperature in the primary system, such that the mixture of the first and second partial flow has the boiling temperature existing in the primary system.

5. Process according to at least one of the preceding claims, characterized in that the sea water is passed through a circulation evaporator located in the primary system.

6. Process according to at least one of the preceding claims, characterized in that an additive for preventing the crystal growth of anhydrite is supplied to the total sea-water flow in relative small quantities.

7. Process according to at least one of the preceding claims, characterized in that the germ-free water distillate is conditioned.

8. Apparatus for carrying out the process for desalinating sea water according to one of Claims 1-7, having a primary system (13; 13') for the sea water and a closed secondary system (11; 11') for the heat transfer, which is separated from the primary system and contains a compressor (66; 66'), the primary system (13; 13') being coupled to the secondary system (11; 11') by a first heat exchanger (52) for the evaporation of the sea water and a second heat exchanger (62) for the condensation of the sea-water vapour, and having a cyclone (56) arranged in the vapour space of the primary system (13; 13') between the evaporator (52) and the condenser (62), characterized by a distributor (22; 22') which subdivides the total sea-water flow supplied to the primary system (13; 13') into a first partial flow and a second partial flow of at least the same size, by a first heat transfer means (28; 28') through which hot water distillate flows at the exit of the primary system (13; 13') and in which the first partial flow can be brought to a temperature close to the boiling temperature in the primary system (13; 13'), by a second heat transfer means (38; 38') through which the discharged hot elutriate flows and in which the second partial flow can be brought to a temperature close to the boiling temperature in the primary system (13; 13'), and by two upstream throttle members (26, 27; 26', 27'), via which a concentration factor (CF), the ratio of the total sea-water quantity supplied per unit time to the elutriation quantity per unit time, can be set between a value of 1.3 and a value of 1.4, preferably approximately 1.33.

9. Apparatus according to Claims [sic] 8, characterized in that a heating device (32) is provided in a still (29).

10. Apparatus according to Claim 8 or 9, characterized in that a third heat transfer means (78) is provided, through which on the one hand the second partial flow in the second supply line (24') flows and which on the other hand is part of an external heating appliance (81).

11. Apparatus according to Claim 10, characterized in that the oil- or gas-driven heating appliance (81) is provided with a forced-circulation heat transfer medium flowing through the third heat transfer means (78).

12. Apparatus according to at least one of Claims 8 to 11, characterized in that the heat transfer means (28, 38; 28', 38', 78) are produced from titanium in the plate exchanger technique.

13. Apparatus according to at least one of Claims 8 to 12, characterized in that the evaporator (52) in the primary system (13; 13') is formed by a circulation evaporator with natural or automatic or with forced fluid circulation.

14. Apparatus according to at least one of Claims 8 to 13, characterized in that the pipeline (16; 16') supplying the total sea-water quantity is connected to a metering station (19; 19') for supplying an additive.

15. Apparatus according to at least one of Claims 8 to 14, characterized in that the distillate line (31; 31') is connected to a conditioning station (39; 39').

16. Apparatus according to at least one of Claims 8 and 10 to 15, characterized in that the second heat transfer means (78) is provided with a bypass (71) which can be shut off.

## Revendications

1. Procédé de dessalement d'eau de mer, dans lequel l'eau de mer, à l'intérieur d'un système primaire et un milieu secondaire, de préférence de l'eau brute, à l'intérieur d'un système secondaire en soi fermé, séparé du système primaire et contenant un condenseur est évaporée et condensée, l'eau de mer étant ce faisant évaporée, par chauffage du milieu secondaire préalablement condensé, puis ultérieurement chauffé dans le condenseur, ensuite la vapeur d'eau est transportée à travers un cyclone, et par condensation subséquente de la vapeur d'eau de mer, le milieu secondaire de nouveau détendu dans le système secondaire s'évapore, et dans lequel le courant d'eau de mer global amené au système primaire est séparé en un premier courant partiel et en un second courant partiel de grandeur au moins équivalente, par lesquels le premier courant partiel est amené dans un premier échangeur de chaleur traversé par le distillat d'eau chaude en sortie du système primaire et le second courant partiel dans un deuxième échangeur de chaleur traversé par la purge chaude décantée est amené à une température proche de la température d'ébullition dans le système primaire, le rapport défini en tant que facteur de concentration (CF) entre quantité d'eau de mer globale amenée par unité de temps et quantité de purge par unité de temps est sélectionné entre une valeur de 1,3 et une valeur de 1,4.

2. Procédé selon la revendication 1, caractérisé en ce qu'un facteur de concentration (CF) de l'ordre de 1,33 est sélectionné.

3. Procédé selon la revendication 1 ou 2, caractérisé en ce que la grandeur du premier courant partiel est sélectionnée de façon à peu près équivalente à la grandeur du courant de distillat et que la grandeur du second courant partiel est sélectionnée de façon à peu près équivalente à la grandeur du courant de purge.

4. Procédé selon au moins l'une des revendications 1 à 3, caractérisé en ce que le second courant partiel est chauffé une fois encore, et ce à une température supérieure à la température d'ébullition dans le système primaire, de telle sorte que le mélange issu du premier et du second courant partiel adopte la température d'ébullition présente dans le système primaire.

5. Procédé selon au moins l'une des revendications précédentes, caractérisé en ce que l'eau de mer est amenée à travers un évaporateur à circulation se trouvant dans le système primaire.

6. Procédé selon au moins l'une des revendications précédentes, caractérisé en ce qu'il est amené au courant d'eau de mer global un additif en quantités relativement réduites, afin d'empêcher le développement de cristaux d'anhydrite.

7. Procédé selon au moins l'une des revendications précédentes, caractérisé en ce que le distillat d'eau exempt de bactéries est conditionné.

8. Dispositif pour la réalisation du procédé de dessalement d'eau de mer selon l'une des revendications 1 à 7, avec un système primaire (13 ; 13') pour l'eau de mer et un système secondaire (11 ; 11') séparé de celui-ci, fermé en soi et contenant un condenseur (66 ; 66') pour le transfert de chaleur, le système primaire (13 ; 13') étant couplé au système secondaire (11 ; 11') par l'intermédiaire d'un premier échangeur de chaleur (52) pour l'évaporation de l'eau de mer et d'un second échangeur de chaleur (62) pour la condensation de la vapeur d'eau de mer, et avec un cyclone (56) disposé dans la chambre de vapeur chaude du système primaire (13 ; 13') entre l'évaporateur (52) et le condenseur (62), caractérisé par un distributeur (22 ; 22') séparant le courant d'eau de mer global amené au système primaire (13, 13') en un premier courant partiel et en un second courant partiel au moins de grandeur équivalente, par un premier échangeur de chaleur (28 ; 28') traversé par le distillat d'eau chaude en sortie du système primaire (13 ; 13'), dans lequel le premier courant partiel peut être amené à une température proche de la température d'ébullition dans le système primaire (13 ; 13'), par un second échangeur de chaleur (38 ; 38') traversé par la purge chaude décantée, dans lequel le second courant partiel peut être amené à une température proche de la température d'ébullition dans le système primaire (13 ; 13'), et par deux organes d'étranglement (26, 27 ; 26', 27') couplés en amont, par l'intermédiaire desquels un facteur de concentration (CF), le rapport entre quantité d'eau globale amenée par unité de temps et quantité de purge par unité de temps, peut être ajusté entre une valeur de 1,3 et une valeur de 1,4, de préférence de l'ordre de 1,33.

9. Dispositif selon la revendication 8, caractérisé en ce qu'il est prévu dans une cucurbite de distillat (29) un dispositif de chauffage (32).

10. Dispositif selon la revendication 8 ou 9, caractérisé en ce qu'il est prévu un troisième échangeur de chaleur (78), qui, d'une part, est traversé par le second courant partiel dans la seconde conduite d'amenée (24') et qui, d'autre part, forme partie intégrale d'un dispositif de chauffage externe (81).

11. Dispositif selon la revendication 10, caractérisé en ce que le dispositif de chauffage fonctionnant à l'huile ou au gaz (81) est doté d'un milieu caloporteur en circulation forcée et traversant le troisième échangeur de chaleur (78).

12. Dispositif selon au moins l'une des revendications 8 à 11, caractérisé en ce que les échangeurs de chaleur (28 ; 38 ; 28'; 38'; 78) sont fabriqués à partir de titane selon une technique d'échangeurs à plaques.

13. Dispositif selon au moins l'une des revendications 8 à 12, caractérisé en ce que l'évaporateur (52) dans le système primaire (13 ; 13') est conçu sous forme d'un évaporateur à circulation avec une circulation de liquide naturelle ou automatique ou forcée.

14. Dispositif selon au moins l'une des revendications 8 à 13, caractérisé en ce que la canalisation amenant la quantité d'eau de mer globale (16 ; 16') est reliée à une station de dosage (19 ; 19') pour amener un additif.

15. Dispositif selon au moins l'une des revendications 8 à 14, caractérisé en ce que la conduite du distillat (31 ; 31') est reliée à une station de conditionnement (39 ; 39').

16. Dispositif selon au moins l'une des revendications 8 et 10 à 15, caractérisé en ce que le second échangeur de chaleur (78) est équipé d'un dispositif de dérivation pouvant être fermé (71).
